**Europäisches Patentamt**

**European Patent Office**

**Office européen des brevets**

(11) Numéro de publication: **0 038 739**
**A1**

# (12) DEMANDE DE BREVET EUROPEEN

(21) Numéro de dépôt: 81400563.3

(22) Date de dépôt: 09.04.81

(51) Int. Cl.³: **H 02 K 37/00**
**H 02 K 21/12, H 02 K 1/14**

(30) Priorité: 23.04.80 FR 8009182

(43) Date de publication de la demande:
28.10.81 Bulletin 81/43

(84) Etats contractants désignés:
BE CH DE FR GB IT LI NL SE

(71) Demandeur: CROUZET
128, Avenue de la République
F-75011 Paris(FR)

(72) Inventeur: Vergues, Jacques
10, rue Couperin
F-26000 Valence(FR)

(74) Mandataire: Bloch, Robert et al,
Cabinet ROBERT BLOCH 39 avenue de Friedland
F-75008 Paris(FR)

(54) Perfectionnement aux moteurs pas à pas à aimant multipolaire.

(57) La présente invention concerne un moteur pas à pas comprenant un rotor (1) multipolaire, un stator (601,602) associé au rotor et des moyens pour engendrer, pour chaque phase, une force magnétomotrice.

Selon l'invention il comporte une seule bobine pour engendrer la force magnétomotrice, et des moyens (603) agencés pour diviser cette force magnétomotrice qui est appliquée aux pôles du rotor.

EP 0 038 739 A1

Croydon Printing Company Ltd.

1

## Perfectionnement aux moteurs pas à pas à aimant multipolaire.

La présente invention concerne un moteur pas à pas comprenant un rotor multipolaire, un stator associé au rotor et des moyens pour engendrer, pour chaque phase, une force magnétomotrice.

Les moteurs connus de ce type comprennent généralement, coaxialement associé au rotor, un boîtier statorique annulaire contenant le bobinage d'excitation, pour chaque phase, et comprenant une pluralité de dents ou languettes polaires éventuellement imbriquées et destinées à coopérer magnétiquement avec le rotor.

Le nombre de pas que peut effectuer le rotor d'un tel moteur au cours d'une révolution complète étant fonction du nombre de dents polaires du stator, il existe de nombreuses applications, notamment dans le domaine de la servo-commande et des automatismes, où, pour obtenir la plus grande précision possible dans le positionnement de certains organes asservis (systèmes de mesure, imprimantes, etc.), on doit disposer de la plus grande résolution angulaire possible, c'est-à-dire de moteurs pouvant effectuer un grand nombre de pas par tour de rotor.

Pour obtenir cette résolution élevée, la pratique traditionnelle consiste à augmenter le plus possible le nombre de dents polaires du stator et corrélativement bien entendu le nombre de dipôles rotoriques.

Toutefois, pour un moteur donné dont la structure géométrique polaire a été adaptée de manière optimale avec les caractéristiques de la source magnétomotrice, on constate que l'opération consistant à augmenter le nombre de pôles statoriques ne peut se faire qu'au détriment de la puissance motrice disponible sur le rotor, c'est-à-dire avec une notable diminution du couple moteur quand bien même on cherche, dans les limites tolérables d'échauffement et de démagnétisation du rotor, à compenser cette perte de puissance motrice par une augmentation de la puissance électrique d'excitation.

En effet, l'augmentation du nombre de pas, et par conséquent la diminution de la valeur angulaire de chacun de ces
pas, entraîne nécessairement une diminution de la largeur
de chaque dent polaire statorique, ainsi qu'une réduction
de l'espace séparant deux dents consécutives. Ainsi, les
dents polaires étant d'épaisseur et de hauteur supposées
inchangées, leurs tranches latérales mutuellement en regard demeurant de ce fait identiques, la réluctance du circuit statorique diminue en proportion de l'espace interdentaire au point que l'augmentation du flux de fuite qui en
résulte entraîne la saturation magnétique des dents dont
la section a été rétrécie.

Ce phénomène de saturation des dents polaires statoriques
constitue donc une limite à l'augmentation de la puissance
motrice d'un moteur donné dont on veut augmenter le nombre
de pas.

Lorsque, malgré cette limite, on désire disposer d'une puissance motrice supérieure à celle qu'elle permet d'atteindre pour un nombre de pas déterminé, on est alors amené, de
manière connue, à réduire en premier lieu la hauteur des
dents polaires statoriques du moteur donné afin de reculer
l'apparition du phénomène nuisible de saturation, puis, en
second lieu, cette réduction de hauteur polaire permettant
la diminution de la hauteur axiale du moteur, à compenser
la perte de puissance motrice disponible en accouplant sur
le même axe autant de moteurs identiques qu'il est nécessaire pour obtenir le couple désiré.

Cette méthode connue présente évidemment l'inconvénient
d'un coût élevé de réalisation puisqu'il faut multiplier le
nombre des éléments technologiques constitutifs du groupe moteur pas à pas procurant la puissance motrice désirée par autant de fois que l'on désire par exemple doubler le nombre de pas.

La présente invention a précisément pour but d'éliminer cet inconvénient en procurant un moyen technologiquement simple et économique pour maintenir à sa valeur originelle la puissance motrice disponible d'un moteur pas à pas à rotor aimanté multipolaire dont on désire augmenter la résolution par multiplication du nombre de pas polaires.

Pour obtenir ce résultat, l'invention concerne un moteur pas à pas comprenant un rotor multipolaire, un stator associé au rotor et des moyens pour engendrer, pour chaque phase, une force magnétomotrice, caractérisé par le fait qu'il comporte une seule bobine, pour engendrer la force magnétomotrice, et des moyens agencés pour diviser cette force magnétomotrice qui est appliquée aux pôles du rotor.

Les caractéristiques et les avantages de l'invention ressortiront clairement de la description qui suit au regard des dessins qui l'accompagnent, qui illustrent un exemple de réalisation de la technique connue perfectionnée selon l'invention.

- La figure 1 représente la coupe diamétrale d'un moteur pas à pas qui, selon la technique connue, comporte un stator double.

- Les figures 2 et 3 montrent comment sur un schéma développé de système multipolaire statorique évoluent la réluctance et la section des dents polaires d'un moteur connu lorsqu'on réduit de moitié la valeur angulaire d'un pas.

- La figure 4 représente en perspective partielle la structure du système multipolaire statorique associé au rotor d'un moteur pas à pas, perfectionné selon l'invention.

4

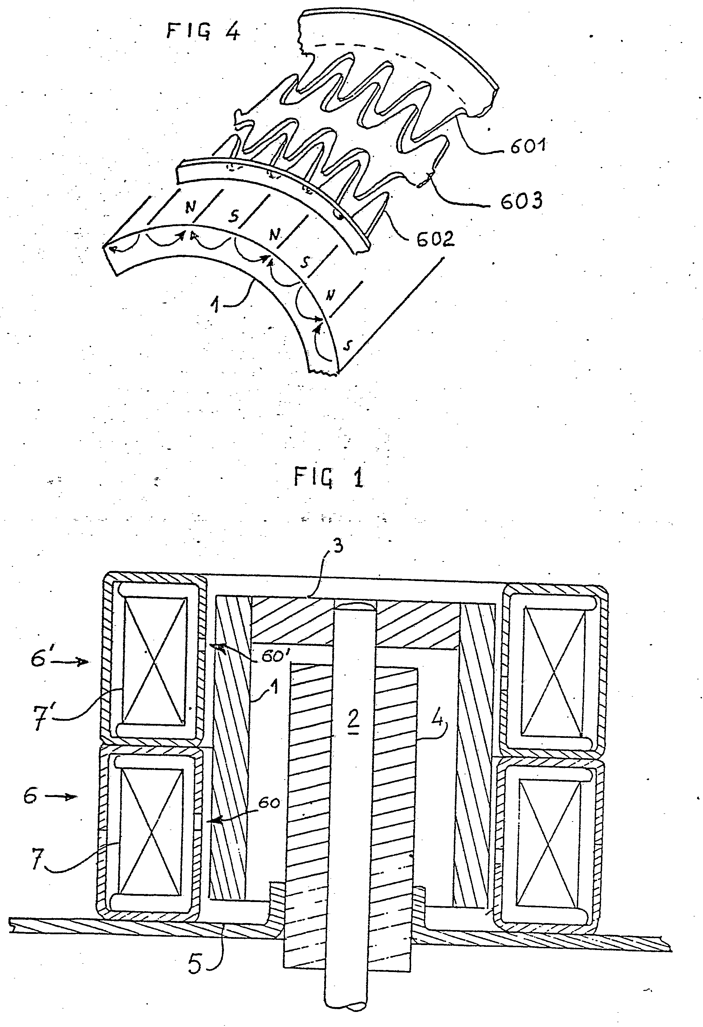

Le moteur pas à pas de la figure 1, dont la structure est bien connue, comporte un rotor cylindrique 1 dont l'axe 2 auquel il est relié par une jante 3 pivote dans le palier 4 solidaire d'un flasque 5.

Le rotor, qui est par exemple en ferrite dure, est aimanté de façon à présenter selon les génératrices périphériques une succession de dipôles magnétiques alternés. Le roto 1 est entouré d'un premier boîtier statorique 6 de forme généralement annulaire, qui est solidaire du flasque 5 et qui contient une bobine d'excitation 7 à enroulements multiples pour permettre l'alimentation à partir d'une source électrique généralement polyphasée.

Le circuit magnétique, constitué par le boîtier statorique 6 est interrompu sur sa paroi cylindrique intérieure de manière à présenter un système multipolaire 60 constitué d'une pluralité de dents dont la disposition alternée et généralement imbriquée détermine selon les génératrices des espaces d'air qui sont le siège d'un flux de fuite engendré par la force magnétomotrice de la bobine et périphériquement orienté par le sens du courant d'excitation, de manière à coopérer avec le flux des dipôles aimantés du rotor 1.

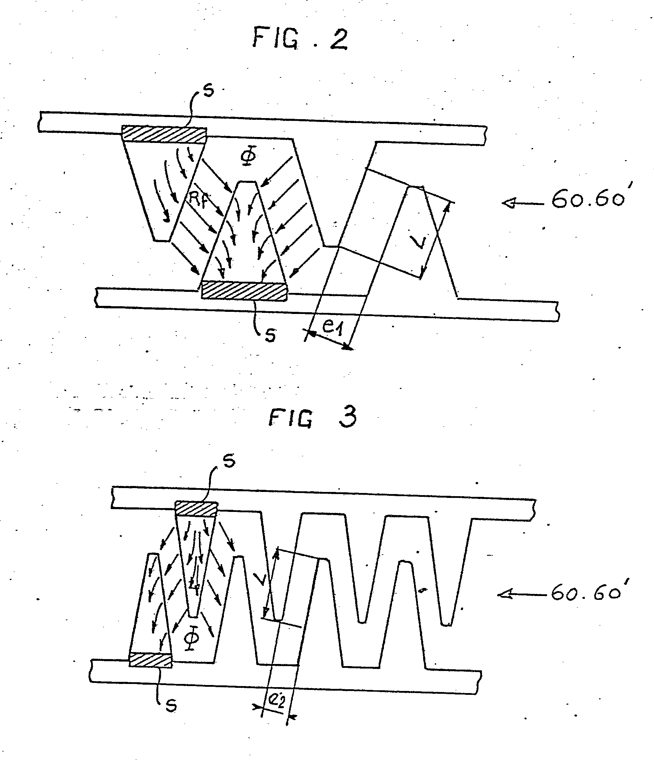

Cette disposition connue, qui est illustrée sur les figures 2 et 3, ne permet pas, comme on le verra plus loin, d'augmenter le nombre de pas d'un moteur donné sans perte de couple. C'est pourquoi, lorsqu'on désire par exemple doubler le nombre de pas d'un moteur de taille donnée, on est amené, ainsi que le représente la figure 1, à en doubler également la structure statorique élémentaire (boîtier statorique 6', bobine d'excitation 7') ainsi, naturellement, que la longueur du rotor 1 dans la même proportion.

Pour expliquer cette nécessité, on doit considérer les figures 2 et 3 qui montrent comment évoluent dans les systèmes multipolaires 60 et 60' la réluctance et la section des dents polaires statoriques d'un moteur donné lorsqu'on réduit, par exemple, le pas de moitié.

La réluctance de fuite Rf du circuit statorique considéré
(fig. 2) est inversement proportionnelle aux surfaces cumulées des flancs de dents polaires en regard et proportionnelle à la distance $e_1$ séparant ces flancs. Pour une épaisseur radiale identique des pièces polaires statoriques, les
surfaces en regard des flancs de dents polaires sont pratiquement proportionnelles aux longueurs L de ces flancs.

D'autre part (figure 3), lorsqu'on double le nombre de pas,
en réduisant de moitié la largeur des dents polaires, la
section S utile de fer à la base de ces dents est également,
de ce fait, réduite de moitié, ainsi que la distance intermédiaire $e_2$.

Il s'ensuit que, la longueur L des flancs de dents en regard demeurant égale, la réluctance statorique diminue sensiblement de moitié. Ainsi, l'augmentation du flux induit $\Phi$,
inversement proportionnel à la réluctance, provoque l'augmentation de l'induction $B = \frac{\Phi}{S}$ et donc une saturation au niveau de la base des dents polaires de section S rétrécie et
par la limitation du flux de fuite interdentaire qui en
résulte, une limitation du couple magnétique exercé sur le
rotor.

Il sera donc nécessaire, afin d'éliminer au mieux le phénomène de saturation nuisible et d'améliorer le rendement
énergétique du moteur, de réduire la hauteur des dents,
ainsi que la hauteur du rotor pour une force magnétomotrice
donnée fournie par le même volume de cuivre du bobinage.

Cet abaissement de la hauteur du moteur se traduit inévitablement par une réduction notable du couple moteur, notamment fonction de cette hauteur (50 % environ pour un doublement du nombre de pas) qui conduit à compenser cette perte par l'adjonction sur le même axe d'un moteur supplémentaire, chaque fois que l'on désire doubler le nombre de pas.

C'est précisément pour éviter cette multiplication coûteuse et compliquée des éléments constitutifs d'un groupement de plusieurs moteurs à grand nombre de pas que l'invention prévoit, ainsi que le représente la figure 4, l'interposition, entre deux couronnes extrêmes 601, 602 de dents polaires statoriques d'un moteur pas à pas à bobine unique, non figurée, d'une couronne intermédiaire 603 en matériau ferromagnétique constituée d'une double série de dents polaires opposées par la base et en nombre égal à celui des pôles du rotor et du stator. Chaque série des dents polaires de la pièce polaire intermédiaire présente un calage angulaire relatif coïncidant avec le calage angulaire des dipôles du rotor, ainsi qu'avec celui des dents polaires extrêmes et opposées du stator.

Cette couronne intermédiaire, dont la fonction consiste essentiellement à subdiviser le potentiel magnétique et en quelque sorte à relayer entre les dents polaires extrêmes du stator le flux engendré par la source de force magnétomotrice ou, en d'autres termes, à diviser la force magnétomotrice appliquée aux pôles du rotor, permet, en optimalisant, comme on l'a expliqué plus haut, la longueur et la largeur relatives des dents polaires, de supprimer le phénomène de saturation nuisible au maintien du couple moteur à sa valeur maximale.

Le maintien en position entre les couronnes extrêmes de la couronne intermédiaire 603 est mécaniquement assuré sur la paroi intérieure de bobine unique par tous moyens appropriés de technologie habituelle, comme par exemple l'emmanchement à force, le collage ou l'insertion au moulage de la matière plastique constituant la carcasse de la bobine.

Théoriquement, il n'y a pas de limite à la multiplication en série coaxiale des couronnes statoriques intermédiaires 603 afin d'augmenter le couple en même temps qu'augmente la longueur du moteur et de ses éléments constituants (bobine unique, rotor multipolaire, boîtier statorique).

Enfin, il faut considérer que chaque couronne intermédiaire 603 à double série de dents polaires (dont la forme et le calage angulaire relatif ne sont déterminés que par l'inclinaison ou le calage angulaire des génératrices dipolaires rotoriques) constitue un stator auxiliaire excité en série par la force magnétomotrice de la bobine unique.

Cette disposition objet de l'invention permet essentiellement d'éviter la saturation des dents polaires à section rétrécie par le flux de fuite circulant dans les espaces interdentaires.

Dans ces conditions, il est possible simplement et économiquement d'augmenter la résolution d'un moteur pas à pas de type donné à double sens de rotation, en augmentant le nombre de ses dents polaires statoriques, sans pour autant en affecter les caractéristiques électromécaniques.

Revendications

1. Moteur pas à pas comprenant un rotor multipolaire (1), un stator (601,602) associé au rotor (1) et des moyens pour engendrer, pour chaque phase, une force magnétomotrice, caractérisé par le fait qu'il comporte une seule bobine (7), pour engendrer la force magnétomotrice, et des moyens (603) agencés pour diviser cette force magnétomotrice qui est appliquée aux pôles du rotor.

2. Moteur pas à pas, selon la revendication 1, caractérisé par le fait que les moyens pour diviser la force magnétomotrice comprennent au moins une pièce polaire intermédiaire (603) en matériau ferromagnétique, intercalée à égale distance entre deux pièces polaires statoriques extrêmes (601, 602) du moteur.

3. Moteur pas à pas, selon la revendication 2, caractérisé par le fait que la pièce polaire intermédiaire (603) présente de part et d'autre de son plan médian une série de dents polaires de forme et de dimensions analogues à celles des dents polaires des pièces statoriques extrêmes (601,602) du moteur, et en nombre égal.

4. Moteur pas à pas, selon la revendication 3, caractérisé par le fait que chaque série des dents polaires de la pièce polaire intermédiaire (603) présente un calage angulaire relatif coïncidant avec le calage angulaire des dipôles du rotor (1), ainsi qu'avec celui des dents polaires extrêmes et opposées du stator (601,602).

5. Moteur pas à pas, selon l'une des revendications 1 à 4, caractérisé par le fait que les moyens (603) pour diviser la force magnétomotrice sont mécaniquement fixés sur la paroi intérieure de la bobine unique (7).

FIG 4

FIG 1

# FIG . 2

← 60.60'

# FIG 3

← 60.60'

**Office européen des brevets**

**RAPPORT DE RECHERCHE EUROPEENNE**

| Catégorie | Citation du document avec indication, en cas de besoin, des parties pertinentes | Revendication concernée |
|---|---|---|
| | DE - A - 1 538 180 (TELDIX) <br> * Page 3, ligne 24 - page 4, ligne 3; page 6, lignes 14-21; figure 4 * | 1-5 |
| | -- | |
| | US - A - 3 755 701 (CULVER) <br> * Colonne 4, lignes 2-17 * | 1,2 |
| | -- | |
| A | FR - A - 1 377 302 (CROUZET) | |
| A | CH - A - 452 680 (CARPANO) | |
| A | FR - A - 2 214 990 (LIP) <br> * Figure 4 * | |
| | -- | |
| A | GB - A - 137 255 (WALKER) <br> * Figure 2 * | |
| | -- | |
| A | US - A - 3 800 175 (PLOTSCHER) <br> * Colonne 2, lignes 21-25 * | 5 |
| | ---- | |

**DOCUMENTS CONSIDERES COMME PERTINENTS**

**CLASSEMENT DE LA DEMANDE (Int. Cl.³)**

H 02 K 37/00
21/12
1/14

**DOMAINES TECHNIQUES RECHERCHES (Int. Cl.³)**

H 02 K 37/00
21/12
21/14
21/16

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 16-07-1981 | RANDES |

OEB Form 1503.1 06.78